(19) Europäisches Patentamt
European Patent Office
Office européen des brevets

(11) Veröffentlichungsnummer: **0 151 750**
**B1**

# (12) EUROPÄISCHE PATENTSCHRIFT

(45) Veröffentlichungstag der Patentschrift: **16.09.87**

(51) Int. Cl.⁴: **C 08 G 63/64**

(21) Anmeldenummer: **84115361.2**

(22) Anmeldetag: **13.12.84**

(54) **Verfahren zur Herstellung von farblosen aromatischen Polyestercarbonaten.**

(30) Priorität: **24.12.83 DE 3346946**

(43) Veröffentlichungstag der Anmeldung: **21.08.85 Patentblatt 85/34**

(45) Bekanntmachung des Hinweises auf die Patenterteilung: **16.09.87 Patentblatt 87/38**

(84) Benannte Vertragsstaaten: **DE FR GB IT NL**

(56) Entgegenhaltungen:
**EP - A - 0 088 322**
**EP - A - 0 095 698**
**FR - A - 1 351 282**

(73) Patentinhaber: **BAYER AG, Konzernverwaltung RP Patentabteilung, D-5090 Leverkusen 1 Bayerwerk (DE)**

(72) Erfinder: **Freitag, Dieter, Dr., Hasenheide 10, D-4150 Krefeld 1 (DE)**
Erfinder: **Bottenbruch, Ludwig, Dr., Wöhlerstrasse 5, D-4150 Krefeld 1 (DE)**
Erfinder: **Hucks, Uwe, Dipl.-Ing., Am Marienstift 30, D-4234 Alpen (DE)**

EP 0 151 750 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Rein aromatische Polyestercarbonate sind bekannte Chemiewerkstoffe mit hervorragenden technologischen Eigenschaften.

Sie können hergestellt werden durch Schmelzumesterung, z.B. gemäss «Polyesters», Pergamon Press 1965, S. 448 f, DE-OS 1495626. Durch Schmelzumesterung erhält man jedoch keine farblosen Polyestercarbonate, da die Materialien thermisch zu stark belastet werden.

Eine andere Methode ist die Umsetzung von Säuredichloriden und Diphenolen in tertiären Aminen als Lösungsmittel in Anwesenheit von Säureakzeptoren. Dieses Verfahren ist ebenfalls in «Polyesters» sowie in der DE-OS 2714544 beschrieben. Hier ist die quantitative Abtrennung der tertiären Base problematisch. Während der thermoplastischen Verarbeitung neigen die Produkte ebenfalls zu Verfärbungen.

Die farblich besten aromatischen Polyestercarbonate erhält man nach dem Phasengrenzflächenverfahren aus Säuredichloriden und Diphenolaten. Auch dieses Verfahren ist beschrieben worden, beispielsweise in «Polyesters», in DE-OS 3007934 und in EP 10840.

Von grossem Einfluss auf die Farbe, die Hydrolyse- und Thermostabilität der aromatischen Polyestercarbonate ist neben dem Herstellungsverfahren die Qualität der Ausgangsstoffe; beim Phasengrenzflächenverfahren besonders die der Chloride der aromatischen Dicarbonsäuren.

Die EP-A 95698 betrifft ein Verfahren zur Herstellung von sehr reinem Terephthalsäure- und Isophthalsäuredichlorid durch Chlorieren von Terephthalsäure- und Isophthalsäuredimethylester mit Chlorgas bei Temperaturen von 100-250°C, gegebenenfalls in Gegenwart von Licht und/oder die Seitenkettenchlorierung aromatischer Verbindungen fördernder Katalysatoren, gemäss dem man dem Terephthalsäure- und/oder Isophthalsäuredimethylester für die Chlorierung 20 bis 200 Gew.-%, bezogen auf das Gewicht des Terephthalsäure- und/oder Isophthalsäuredimethylesters, Terephthalsäure- und/oder Isophthalsäuredichlorid zusetzt.

Die EP-A 88322 beschreibt aromatische Polyester mit hohem Molekulargewicht, niedrigem Endgruppengehalt und geringer Eigenfärbung, die in Gegenwart eines definierten Alkaliüberschusses und cycloaliphatischer tertiärer Amine nach dem Phasengrenzflächenverfahren hergestellt werden können. Polyestercarbonate werden in dieser Schrift nicht erwähnt.

Der Erfindung liegt die Erkenntnis zugrunde, dass aromatische Polyestercarbonate von besonders günstiger Farbzahl, besonders guter Hydrolyse- und Thermostabilität nach dem Phasengrenzflächenverfahren erhalten werden, wenn als Ausgangsprodukte Dicarbonsäuredichloride verwendet werden, die durch Chlorierung der Dimethylester der aromatischen Dicarbonsäuren (z.B. gemäss DE-PS 1064496 bzw. DE-AS 1152400) hergestellt worden sind, und gleichzeitig als Katalysatoren tertiäre cycloaliphatische Amine. Beide Massnahmen müssen gleichzeitig erfüllt sein.

Werden beispielsweise Dicarbonsäuredichloride eingesetzt, die durch Chlorierung der entsprechenden Dicarbonsäuren mit $SOCl_2$, $COCl_2$ oder Phosphorchloriden hergestellt wurden, sind die physikalischen Eigenschaften der Polyestercarbonate wesentlich schlechter, auch wenn in Gegenwart von tertiären cycloaliphatischen Aminen polykondensiert wurde. Mit anderen, z.B. offenkettigen tertiären Aminen sind die erzielbaren Eigenschaften noch schlechter. Dies gilt erstaunlicherweise auch dann, wenn man die Dicarbonsäuredichloride durch Destillation reinigt und sich durch chromatographische Analyse kein Unterschied zwischen den nach verschiedenen Herstellungsverfahren erhaltenen aromatischen Dicarbonsäuredichloriden feststellen lässt.

Gegenstand der Erfindung ist somit ein Verfahren zur Herstellung von farblosen, thermostabilen und hydrolysestabilen, rein aromatischen Polyestercarbonaten mit bis zu 80 Mol.-% Carbonatgruppen, bezogen auf die Summe von Ester- und Carbonatgruppen, durch an sich bekannte Grenzflächenpolykondensation von aromatischen Dicarbonsäuredichloriden und Diphenolaten, dadurch gekennzeichnet, dass man Dicarbonsäuredichloride verwendet, die aus den Dimethylestern der entsprechenden Säuren durch Chlorierung erhalten worden sind, und als Katalysatoren tertiäre cycloaliphatische Amine.

Bevorzugte Diphenole sind Verbindungen der Formel

$$HO — Z — OH$$

worin Z einen zweiwertigen ein- oder mehrkernigen aromatischen Rest mit 6 bis 30 C-Atomen bedeutet, und beide OH-Gruppen direkt an je ein aromatisches C-Atom gebunden sind.

Besonders bevorzugte Diphenole sind Verbindungen der Formel

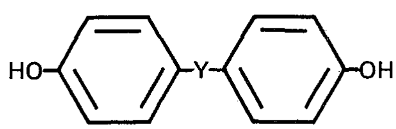 (V)

in der

Y eine Einfachbindung, einen Alkylen- oder Alkylidenrest mit 1 bis 7 C-Atomen, einen Cycloalkylen- oder Cycloalkylidenrest mit 5 bis 12 C-Atomen, -O-, -S-, $-\underset{\underset{O}{\|}}{S}-$, $-SO_2-$ oder $-\underset{\underset{O}{\|}}{C}-$ bedeutet,

sowie deren kernalkylierte und kernhalogenierte Derivate, z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole
sowie deren kernalkylierte und kernhalogenierte

Verbindungen, insbesondere z.B. Bisphenol A = 2,2-Bis-(4-hydroxyphenyl)-propan, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierte Derivate. Besonders bevorzugt ist Bisphenol A. Es können auch beliebige Mischungen der vorgenannten Diphenole verwendet werden.

Als Dicarbonsäuredichloride für die erfindungsgemässen aromatischen Polyestercarbonate sind u.a. zu nennen:
Terephthalsäuredichlorid,
Isophthalsäuredichlorid,
o-Phthalsäuredichlorid,
Diphenyl-dicarbonsäuredichlorid,
Diphenylether-dicarbonsäuredichlorid,
Naphthalindicarbonsäuredichlorid und deren Gemische.

Als Verzweigungsmittel für die aromatischen Polyestercarbonate können vorzugsweise 3- oder höherfunktionelle Carbonsäurechloride und/oder Phenole in Mengen von 0,01 bis 1 Mol.-%, bezogen auf eingesetzte Dicarbonsäurechloride bzw. Diphenole, verwendet werden.

Als Kettenabbrecher für die aromatischen Polyestercarbonate werden vorzugsweise Phenole, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{12}$-Alkylgruppen und Halogenatome substituiert sein können, in Mengen von 0,1 bis 10 Mol.-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht. Die Kettenabbrecher können, soweit es sich um phenolische Verbindungen handelt, dem Reaktionsgemisch vor Beginn oder während der Reaktion zugesetzt werden. Es muss jedoch noch genügend Säurechlorid und/oder Phosgen zur Verfügung stehen, damit sie reagieren und die Kette begrenzen können; z.B. kann der Kettenabbrecher zusammen mit dem Diphenol eingesetzt werden, in der Lösung der Chloride der aromatischen Dicarbonsäuren enthalten sein oder dem Reaktionsgemisch nach Herstellung eines Vorkondensats zugesetzt werden.

Sofern man als Kettenabbrecher Säurechloride und Chlorkohlensäureester verwendet, werden sie vorzugsweise gemeinsam mit den aromatischen Dicarbonsäuredichloriden und/oder Phosgen eingesetzt. Diese Kettenabbrecher können dem Reaktionsgemisch auch noch zu einem Zeitpunkt zugesetzt werden, wenn die Chloride der Dicarbonsäuren und das Phosgen schon weitgehend oder vollständig abreagiert haben.

Am Aufbau der aromatischen Polyestercarbonate können auch bis jeweils 30 Mol.-% der Dicarbonsäuren und Dihydroxyverbindungen aliphatische Baugruppen, z.B. Adipinsäure, Butandiol-1,4 beteiligt sein.

Weiterhin können die aromatischen Polyestercarbonate teilweise aus aromatischen Hydroxycarbonsäuren, z.B. p-Hydroxy-benzoesäure aufgebaut sein. Der Anteil solcher Hydroxycarbonsäuren kann bis zu 100 Mol.-% (bezogen auf Bisphenol) betragen.

Falls Iso- und Terephthalsäure gemeinsam am Aufbau der aromatischen Polyestercarbonate beteiligt sind, so kann deren Verhältnis 1:20 bis 20:1 betragen.

Die erfindungsgemäss hergestellten aromatischen Polyestercarbonate können vorzugsweise bis zu 50 Mol.-% Carbonatgruppen enthalten, bezogen auf die Summe von Ester- und Carbonatgruppen.

Die Herstellung der aromatischen Polyestercarbonate ist bekannt und z.B. in DE-OS 1495626, 2714544, 3007934 beschrieben.

Die relative Lösungsviskosität ($\eta_{rel}$) der aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25°C).

Die erfindungsgemäss als Katalysatoren dienenden cycloaliphatischen tertiären Amine enthalten 1 bis 4, vorzugsweise 1 bis 2 in einem 4- bis 7gliedrigen Cycloaliphaten eingebaute Heteroatome, von denen mindestens eines ein tertiäres Stickstoffatom ist.

Neben Stickstoffatomen können als Heteroatome z.B. Sauerstoff- und/oder Schwefelatome auftreten. Die cycloaliphatischen tertiären Amine können mit 1 bis 2 $C_5$-$C_8$-Cycloaliphaten oder -Aromaten kondensiert sein. In diesen Fällen können tertiäre Stickstoffatome auch als Brückenkopfatome fungieren.

Bevorzugte tertiäre Amine im Sinne der Erfindung sind z.B. N-$C_1$-$C_6$-Alkyl-pyrrolidine, -piperidine, -morpholine, -dihydroindole, -dihydroisoindole, -tetrahydrochinoline, -tetrahydroisochinoline, -benzomorpholine, 1-Azabicyclo-[3.3.0]-octan, Chinuclidin, N-$C_1$-$C_6$-Alkyl-2-azabicyclo-[2.2.1]-octan, N-$C_1$-$C_6$-Alkyl-2-azabicyclo-[3.3.1]-nonan, N-$C_1$-$C_6$-Alkyl-3-azabicyclo-[3.3.1]-nonan.

Besonders bevorzugt sind N-Ethylpyrrolidon, N-Ethylpiperidin, N-Ethylmorpholin, N-Isopropylpiperidin, N-Isopropylmorpholin.

Sowohl der Ester- als auch der Carbonatanteil der erfindungsgemässen aromatischen Polyestercarbonate kann in Form von Blöcken oder statistisch verteilt im Polykondensat vorliegen.

Die erfindungsgemäss hergestellten aromatischen Polyestercarbonate können Stabilisatoren, Fliessmittel, Weichmacher, Entformungsmittel, Verstärkungs- und Füllstoffe, wie z.B. Glasfasern, Glaskugeln, Asbest- und Kohlenstoffasern, Kieselgur, Kaolin, Kreide, Gesteinsmehl sowie Pigmente enthalten.

Die gemäss der Erfindung hergestellten aromatischen Polyestercarbonate können nach üblichen Verfahren in Spritzgiessmaschinen zu Formkörpern oder in Extrudern zu Halbzeug verarbeitet werden.

Die Formmassen finden vorzugsweise überall dort Anwendung, wo hinsichtlich Farbe, Transparenz, Hydrolysefestigkeit, Wärmeformbeständigkeit und Stabilität gegen oxidativen Abbau besonders hohe Anforderungen an die Formteilqualität gestellt werden.

*Beispiele*

*Beschreibung der Methode zur Messung der Gelbwerte*

*Spektroskopische Gelbwertbestimmung*

Zur Beurteilung der Farbveränderung wurden jeweils 4 g des Polymeren in 100 ml $CH_2Cl_2$ gelöst, an der Lösung in einer Schichtdicke von 10 cm (entsprechend einem gespritzten Prüfkörper von 4 mm Schichtdicke) mit Licht der Wellenlängen 400 bis 700 nm (visueller Spektralbereich) die Transmission gemessen und gemäss DIN 6167 (z.Z. Entwurf von Dezember 1978) die Gelbwerte G errechnet.

Zugrundegelegt wurde Normlichtart C (Tageslicht) und der 2°-Normalbeobachter. Die so errechneten Gelbwerte stimmen mit den Werten des Yellowness-Indexes nach ASTM D 19-2570 überein.

Die Gelbwerte sind in Tabelle 1 aufgenommen.

*Bestimmung der Thermostabilität*

Ca. 3 g des granulierten aromatischen Polyestercarbonates werden in einem 100 ml-Glaskolben im Vakuum von 20 mbar in ein Salzbad von 330°C getaucht (bis zum Ansatz des Halses), nach dem Aufschmelzen 15 Minuten so belassen, dann der Kolben aus dem Bad gezogen und die Substanz im Vakuum abkühlen gelassen.

Die Veränderung der relativen Lösungsviskosität bei dieser Temperung der Schmelze ist ein Mass für die Thermostabilität der Probe. Weiterhin wurde der thermisch-oxidative Abbau durch Messung der Kerbschlagzähigkeit von gespritzten Normkleinstäben nach 500 Stunden Lagerung an Luft bei 150°C bestimmt.

*Bestimmung der Hydrolysefestigkeit*

Gespritzte Normkleinstäbe wurden 500 Stunden in siedendem Wasser aufbewahrt und die Hydrolysefestigkeit durch Veränderung der Kerbschlagzähigkeit beurteilt.

Die Messwerte sind in Tabelle 1 zusammengestellt.

*Ausgangsstoffe für die aromatischen Polyestercarbonate*

Für die Untersuchungen wurden technische Iso- und Terephthalsäure der Firma Amoco, Type I PA 99 bzw. TA 33 verwendet. Als Bisphenol A wurde technische Ware der Bayer AG eingesetzt. Aus den Dicarbonsäuren wurden einerseits gemäss DE-OS 3040294 durch Erhitzen mit überschüssigem $SOCl_2$ die entsprechenden Säuredichloride hergestellt. Die Dicarbonsäuredichloride wurden gereinigt.

Andererseits wurden die technischen Dimethylester der aromatischen Dicarbonsäuren gemäss EP-A 95698 in die Dicarbonsäuredichloride übergeführt und ebenfalls fraktioniert destilliert.

Gaschromatografisch konnten bei den beiden Dicarbonsäuredichlorid-Qualitäten keine Unterschiede festgestellt werden.

*Vergleichsbeispiel 1*

Aromatisches Polyestercarbonat aus Bisphenol A und einem Iso- und Terephthalsäuredichloridgemisch (1:1) mit 50 Mol.-% Carbonesteranteil. Mit Dichloriden aus dem $SOCl_2$-Verfahren und Triethylamin als Katalysator.

2,736 kg (12 Mol) BPA,
980 g (24,5 Mol) NaOH,
8 g $NaBH_4$

wurden unter $N_2$ in 30 l Wasser gelöst, dann je 9 l Dichlormethan und Chlorbenzol zugesetzt. Unter heftigem Rühren wurde eine Lösung aus je 609,1 g Iso- und Terephthalsäuredichlorid in 4 l Dichlormethan zugetropft, dann 30 Minuten nachgerührt.

Nach Zugabe von 54,1 g p-tert. Butylphenol erfolgte die Einleitung von 705 g (20% Überschuss) Phosgen innerhalb 1 Stunde. Nach dem Ende der Phosgeneinleitung wurden 6 g Triethylamin zugesetzt und noch 1 Stunde nachgerührt, wobei der pH-Wert der wässrigen Phase bei 10 bis 12 gehalten wird, gegebenenfalls durch Zugabe von NaOH.

Zur Aufbereitung des Ansatzes wurden die Phasen getrennt, die organische Phase mit verd. $H_3PO_4$ angesäuert und mit Wasser elektrolytfrei gewaschen. Nach dem Abdestillieren des Dichlormethans aus der Lösung wurde das Chlorbenzol in einem Doppelwellenextruder im Vakuum bei 290°C verdampft, das Polyestercarbonat als Strang abgezogen und granuliert.

Das Produkt zeigte einen $\eta$ rel-Wert von 1,278, einen Gelbwert von 48,2.

*Vergleichsbeispiel 2*

Wie Vergleichsbeispiel 1, jedoch mit 6,8 g N-Ethylpiperidin anstelle von Triethylamin. $\eta$ rel des Polyestercarbonates lag bei 1,280, der Gelbwert bei 11,9.

*Vergleichsbeispiel 3*

Arbeitsweise wie bei Vergleichsbeispiel 1, jedoch mit Dicarbonsäuredichlorid aus Dimethylester: $\eta$ rel = 1,285, Gelbwert 34,7.

*Beispiel 1 (erfindungsgemäss)*

Kombination der über die Dimethylester erhaltenen Dicarbonsäuredichloride mit N-Ethylpiperidin als Katalysator: $\eta$ rel = 1,286, Gelbwert 4,5.

*Tabelle 1: Eigenschaften der hergestellten aromatischen Polyestercarbonate*

| Produkt von | | η rel[1)] | Kerbschlag-zähigkeit $a_K$ $[kJ/m^2]$[2)] | Gelb-wert G | *Thermostabilität* η rel nach Erhitzen der Schmelze 15 Min. 330°C | *Thermostabilität* $a_K$ nach 500 Std. Lagerung an Luft bei 150°C $[kJ/m^2]$ | *Hydrolysefestigkeit* $a_K$ nach 500 Std. Lagerung in Wasser bei 100°C $[kJ/m^2]$ |
|---|---|---|---|---|---|---|---|
| Vergl. Beisp. | 1 | 2,278 | 36,7 | 48,2 | 1,230 | 9,6 | 8,3 |
| | 2 | 1,280 | 37,5 | 11,9 | 1,236 | 10,9 | 7,1 |
| | 3 | 1,285 | 38,6 | 34,7 | 1,232 | 8,4 | 7,0 |
| Beispiel | 1 | 1,286 | 38,1 | 4,5 | 1,264 | 27,5 | 25,3 |

1) η rel = relative Lösungsviskosität, gemessen an einer Lösung von 0,5 g Polykondensat in 100 ml $CH_2Cl_2$--Lösung bei 25°C.

2) Kerbschlagzähigkeit $a_K$, bestimmt gemäss DIN 53453.

**Patentanspruch**

Verfahren zur Herstellung von farblosen, thermostabilen und hydrolysestabilen, rein aromatischen Polyestercarbonaten mit bis zu 80 Mol.-% Carbonatgruppen, bezogen auf die Summe von Ester- und Carbonatgruppen, durch an sich bekannte Grenzflächenpolykondensation von aromatischen Dicarbonsäuredichloriden und Diphenolaten, dadurch gekennzeichnet, dass man Dicarbonsäuredichloride verwendet, die aus den Dimethylestern der entsprechenden Säuren durch Chlorierung erhalten worden sind, und als Katalysatoren tertiäre cycloaliphatische Amine.

**Claim**

Process for the production of colourless, thermostable and hydrolysis-stable, fully aromatic polyester carbonates containing up to 80 mol % of carbonate groups, based on the sum of ester and carbonate groups, by the interfacial polycondensation, known per se, of aromatic dicarboxylic acid dichlorides and diphenolates, characterised in that dicarboxylic acid dichlorides are used which have been obtained by chlorination from the dimethyl esters of the corresponding acids and tertiary cycloaliphatic amines are used as the catalysts.

**Revendication**

Procédé de préparation de polyester-carbonates aromatiques purs incolores, stables à la chaleur et à l'hydrolyse, contenant jusqu'à 80 moles % de groupes carbonate par rapport à la somme des groupes ester et des groupes carbonate, par polycondensation connue en soi à l'interface de phases entre des dichlorures d'acides dicarboxyliques aromatiques et des diphénates, caractérisé en ce que l'on utilise des dichlorures d'acides dicarboxyliques qui ont été obtenus à partir des esters diméthyliques des acides correspondants par chloration et, en tant que catalyseurs, des amines cycloaliphatiques tertiaires.